# EUROPEAN PATENT APPLICATION

(11) **EP 1 965 190 A1**
(43) Date of publication of application: **03.09.2008**
(21) Application number: 07003981.3
(22) Date of filing: 27.02.2007
(51) Int. Cl.: G01N 1/30

(54) **Fixation of a biological sample**

(71) Applicant: Qiagen GmbH, 40724 Hilden (DE)
(72) Inventor: Grölz, Daniel, 42697 Solingen (DE); Lenz, Christian, 40235 Düsseldorf (DE); Oelmüller, Uwe, 40699 Erkrath (DE)
(74) Representative: Polypatent

(57) **Abstract**

The present invention relates to a method for the treatment of a biological material, comprising the steps
i) providing a biological material, and
ii) contacting the biological material with a first non-aqueous composition comprising:
(a1) 10 to 90 vol.% methanol, and
(a2) at least one additional additive, and
(a3) optionally an acid.

iii) transferring the biological material into a second composition (B) comprising up to 99 vol.% ethanol
as well as to a new composition for preservation of a biological material usable in said method and the biological material resulting from this method, a method for the analysis of a treated biological material, various kits as well as the use of the composition in such a method.

## Description

The present invention relates to a method for fixation of a biological material, the biological material resulting from this method, kits for carrying out said method as well as the use of a composition for said method.

For a long time the emphasis has been solely the pathological or histological examinations of biological materials. If at all, the samples for these types of examination were usually conserved or stabilised by storing the samples in formaldehyde solutions and/or by embedding them in paraffin. However, the conservation of biological materials by cooling or freezing has also been standard practice for a long time.

It was first recognised that the determination of particular components of biological materials, such as for example nucleic acids or proteins, particularly in the field of medical and clinical diagnosis, is of great benefit, and also the need for new, more effective and more economical conservation and stabilisation reagents and or methods became apparent.

In the course of these developments it was recognised that precisely the status (gene expression profile or proteome) of the important components of the fresh samples for molecular biological examination can change rapidly, immediately after removing the sample from its natural environment, such that already a longer storage of the samples in a non-treated state, e.g. due to an unintentionally delayed transport to a laboratory etc., can invalidate molecular analyses or even make them quite impossible.

Precisely the nucleic acid status of a biological material alters that much more, the longer the elapsed time between the sample and its analysis. The ribonucleic acids (RNA) degrade particularly quickly due to ubiquitous RNases. Also, besides the degradation of nucleic acids, stress genes, for example, are induced and lead to the synthesis of new mRNA molecules that likewise strongly alter the transcription pattern of the sample. Accordingly, in order to retain the gene expression profile, the sample under examination has to be stabilised immediately.

An immediate stabilisation of the sample is needed, not only for the analysis of the nucleic acids but also for detailed examinations of the proteome of a biological material, because the protein pattern is also immediately altered after removal of the sample. This occurs firstly by degradation or new syntheses, secondly- particularly quickly - by changes to the protein modifications, such as e.g. phosphorylation/dephosphorylation.

As chemical analyses of proteins and molecular analyses are also increasingly used in areas other than in the field of medical and clinical diagnostics, such as forensics, pharmacy, food analysis, agriculture, environmental analyses as well as in many research areas, the retention of the integrity of the molecular structure of samples and consequently their immediate stabilisation, is therefore a necessary requirement in all these fields.

Thus, over the years, a great number of the most varied stabilisation reagents and stabilisation methods have been developed for the stabilisation of a wide range of the most varied biological materials.

As mentioned before, stabilisation by means of formalin and the subsequent embedding of the stabilised samples for the histological examination of tissue has been known for a long time. However, this type of stabilisation is mostly unsuitable for use in molecular biological processes, as only a very insufficient stabilisation of the nucleic acids results, and so at most, a qualitative, but not quantitative indication of the nucleic acids or nucleic acid fragments present is possible.

Moreover, the stabilisation with crosslinking stabilisers such as formalin leads to a reduced extractability of the nucleic acids or proteins from the tissue. Formalin is also toxicologically not harmless.

Stabilisation reagents, such as cationic detergents are described in US 5,010,184, US 5,300,545, WO-A-02/00599 and WO-A-02/00600, with which very good qualitative identifications of nucleic acids can be achieved. However, these types of stabilisers do not sufficiently stabilise nucleic acids in compact pieces of tissue.

Other stabilisers that comprise, for example, high concentrations of ammonium sulfate (see e.g. US 6,204,375), are very suitable for stabilising nucleic acids in various tissues. However, they are extremely unsuited for use in stabilising cell-containing or cell-free body fluids, such as, for example, blood, serum or plasma, and in addition demonstrate poorer stabilising properties with some types of tissue, such as, for example, fatty tissue.

Moreover, those reagents and methods, with which nucleic acids can be stabilised for quantitative identification, are generally not suitable for histological examinations, because these stabilisers conserve the nucleic acids but not the cellular or tissue structures.

This demonstrates that it is particularly difficult to simultaneously stabilise RNA, DNA and proteins in tissue samples and also histologically conserve the tissue samples. Moreover, work with cells or other biological materials cannot necessarily be applied to compact tissue. The stabilisation of nucleic acids in compact tissue samples is particularly difficult in comparison with other biological materials. Due to their composition, their components and structure, tissues are complex and heterogeneous. In order to stabilise nucleic acids in compact tissue samples, the effect of the stabilising reagent must develop not only on the surface of the cells and/or inside a layer of cells, but also deep within the complex sample material. In addition, often within one and the same biological material, very different tissue and/or cell types have to be addressed, which differ, for example, in the cell structure, the membrane constitution, the compartmentalisation and the biomolecules, e.g, with regard to the proteins, the carbohydrates and/or the fat content.

A frequently used form of stabilisation for tissue samples, including all the components, and known from the prior art, is freezing or deep freezing the samples. The sample, directly after removal from its natural environment, is deep frozen below -80 °C in liquid nitrogen. Samples treated in this way can then be stored at about -70 °C for an almost unlimited time without loss of integrity. However, these types of processes consistently require very laborious logistical conditions, as a thawing of the samples has to be prevented during transport, storage or during the most varied applications and uses. Besides the additional costs for special sample holders and the permanent cooling of the samples, in addition the use of liquid nitrogen is not only very cumbersome, but also only practicable under specific safety measures.

Moreover, a subsequent analysis of the deep-frozen sample mostly proves to be very difficult, particularly for individual components of the sample. Thus, the thawing or melting of the sample during transport or processing leads to degradation, particularly of the RNA. This means that such melted or thawed samples no longer yield reproducible results. Also, precisely such pieces of tissue in the frozen state are processable only with great difficulty, cut up by hand for example, or with an increased apparatus cost.

So-called transition solutions have also been described that reduce the disadvantages associated with processing deep-frozen samples, especially for isolating RNA. This entails the deep-frozen sample being firstly transferred into a solution precooled to -70 °C to -80 °C, and then stored in it for a few hours (at least 16 hours) at about -20 °C, Then the sample, soaked with the transition solution, can be warmed up to a working temperature of -4 °C to room temperature, but only for a short period, for example enough for cutting up the sample, without the status of the nucleic acid being altered. However, further analyses and storage of the sample - especially at room temperature - are not possible. These types of transition solutions, known for example from WO-A-2004/72270, consist primarily of monohydric alcohols.

Disadvantageously, the samples treated with current transition solutions only remain stable at room temperature for a very short time, with the result that the processing time is very short and is very easily exceeded, especially for cutting and weighing steps. Moreover, the transition occurs only very slowly, such that no direct experiments may follow and mostly result in waiting periods of one day. Similarly, an undamaged transport at room temperature of the samples treated in this way is not possible as not only the transition but also the subsequent stable sample storage must be carried out at ≤ -20 °C. Also, transport of the sample is only possible at ≤ -20 °C, requiring the use of coolants, for example dry ice.

Although the use of conventional transition solutions brings improvements in sample processing, such as e.g. the weighing or cutting, neither the equipment expense is reduced (as the solution for the transition has to be cooled down to -70 to -80 °C and therefore a suitable cooling device has to be available anyway), nor can the samples treated with the transition solution be stabilised for a longer period at room temperature.

Another disadvantage of all methods including snap freezing of fresh tissue samples is, that due to ice crystal artefacts morphological details are not retained accurately. This may impair diagnosis based on histological stainings.

Tissue fixatives for preservation of morphological structures can be divided into two groups. Group one contains crosslinking agents like formaldehyde, paraformaldehyde or glyoxal. From these 4% buffered formaldehyde is the most widely employed fixative. The only change made since its introduction in 1896 by F. Blum is neutral buffering of formalin at a physiological pH (NBF, neutral buffered formalin). Although not fully understood it is thought that the aldehydes form cross-links between proteins. By this enzymatic activity is ceased and soluble proteins are fixed to structural proteins. Since formaldehyde also reacts with nucleic acids, NBF fixation leads to low yield and degradation of nucleic acids.

The second group does not contain crosslinking agents, but alcohols as major components. Noncrosslinking, alcoholic fixatives were introduced to avoid hazardous formaldehyde fixation and to better preserve tissue macromolecules and especially protein epitops for immunohistochemical methods. Alcohols have to penetrate the tissue and to reach a certain local concentration for precipitating and denaturation of proteins. In recent times some of the alcoholic fixatives like Carnoy's (60% ethanol, 30% chloroform, 10% acetic acid) or Methacarn (Carnoy's with the substitution of ethanol with methanol) have been found to yield superior results as nucleic acids fixatives compared to aldehydes (Cox et al., Experimental and Molecular Pathology 2006; 80: 183-191). Other more recently published fixatives based on alcohol consist of 70% ethanol (Gillespie et al., Am. J. Pathol. 2002; 160(2):449-457), 56% Ethanol and 20% PEG (polyethyleneglycol, Bost-wick et al.; Arch.Pathol. Lab. Med. 1994; 118:298-302) or 90% methanol and 10% PEG300 (Vinvek et al., Lab. Investigation 2003; 83(10): 1427-35).

In addition several recently published patent applications claim for improved noncrosslinking fixatives. In DE 199 28820 a fixative is described containing a mixture of different alcohols, aceton, PEG and acetic acid. In US 2003/0211452 A1 a fixative commercialised as "Umfix" is described containing at least 80% methanol and up to 20% PEG300 for preservation of RNA, DNA and morphology. Fixatives based on ethanol for preservation of molecular content and morphology are described in US 2005/0074422 A1 ("Finefix"), WO 2004/083369 ("RCL2") and WO 05/121747 A1 ("Boonfix"). In US 2003/119049 an universal collection medium is described which is water based and comprises a buffer component, one alcohol, a fixative component and an agent to inhibit degradation.

However all these above mentioned alcoholic fixatives show significant disadvantages. Fixatives based on Ethanol or mixtures of different alcohols balanced with water do not prevent RNA from degradation. Fixatives without acid and high amount of alcohol may preserve RNA for short times but show artefacts like tissue hardening or shrinkage which lead to disruption of morphological details.

Neither of the described fixatives is able to preserve RNA integrity over longer time periods, e.g. up to three days at ambient temperature with simultaneous stabilisation of morphology.

Beside crosslinking and alcoholic fixatives there are a number of agents known which combine both groups of fixatives. One example is "Genofix", described in US 5,976,829 A for preservation of morphology, immunogenicity as well as RNA and DNA integrity. Since formaldehyde is one component "Genofix" also shows all the disadvantages of crosslinking agents.

A different approach is described in WO 03/029783 A1. The so-called HOPE-technique (Hepes-Glutamic acid buffer mediated Organic solvent Protection Effect) comprises a protection-solution with an organic buffer, acetone as the only dehydrating agent, and pure paraffin of 52-54 °C melting temperature. The disadvantage of HOPE is that the tissue must be kept at 4°C over night until processing. "Liforlab" from OncoSience described in WO2004/099393A1 is an oxygen enriched solution which contains inorganic salts, amino acids, vitamins, cholesterol and adenosine. Since neither HOPE nor Liforlab fix tissue they do not conserve the molecular content of the cells as if they were still in the patient's body. Instead it is highly likely that the expression profile of e.g. RNA will change during storage and/or transportation.

The object of the present invention was to provide a method to stabilise biological material in an effective, fast and easy way allowing isolation of nucleic acids and/or proteins as well as histological analysis.

In particular, the present invention was based on the object of specifying a method for stabilising a biological material, which leads to an acceptable stabilisation of the biological material if possible without adding crosslinking, carcinogenic or foetus damaging substances.

Moreover, the present invention was based on the object of specifying a method for stabilising a biological material, with which both frozen and also fresh biological materials can be stabilised under the most moderate temperature conditions possible, for example also at room temperature, without impairing the expression profile of the genome and/or proteome of the biological material.

Moreover, the method for stabilising a biological material was intended to enable both a histological analysis of the stabilised biological material as well as an analysis of the biomolecules comprised in the biological material. In this context, the stabilisation method should particularly enable both proteins as well as nucleic acids in the stabilised biological material to be qualitatively and quantitatively analysed. Therefore by stabilising the biological material, the quality and quantity of the nucleic acids that for example can be determined by gel analysis or by the number of PCR cycles until a given amount of nucleic acid is obtained, and the quality and quantity of the proteins that can be determined by polyacrylamide gel electrophoresis or for example in the case of an enzyme can be determined by suitable activity tests, should not be impaired.

Furthermore, the method for stabilising a biological material was intended to afford a stabilised biological material that can be analysed not only at moderate temperatures, for example at room temperature, but can be optionally stored prior to or after such an analysis for the longest possible time under such moderate conditions of temperature.

In the case of biomolecules, the term "stabilisation" is intended to mean preferably the inhibition of the degradation, the modification, the induction or the change in the activity of biomolecules. In the case of histological analyses of biological materials, the term "stabilisation" is intended to mean preferably the prevention of a significant change of the morphology of the samples.

A contribution to achieving the objects cited above is provided by a method for treating a biological material, wherein the method comprises the steps of
i) providing a biological material, and
ii) contacting the biological material with a first non-aqueous composition comprising:
   (a1) 10 to 90 vol.% methanol, and
   (a2) at least one additional additive, and
   (a3) optionally an acid.
iii) transferring the biological material into a second composition (B) comprising up to 99 vol.% ethanol.
   Particularly useful as a first composition in step ii) is a non-aqueous composition (A) for preservation of biological material, the non-aqueous composition (A) comprising
   (α1) 10 to less than 80 vol.%, methanol, and
   (α2) at least one additional additive, and
   (α3) an acid.
   It was surprisingly found that freshly isolated biological materials can be stabilised using the methanol containing composition (A), and frozen biological materials, for example deep frozen in liquid nitrogen, can be prepared for a histological and/or microbiological analysis. It is not required for the biological material that had been brought into contact with the composition to be cooled below 0 °C and to analyse or store it at such low temperatures, and therefore the inventive method can be carried out without any costly apparatus, especially without cooling devices or coolants.
   Compositions described herein were developed for their chemical simplicity, ability to preserve morphologic and genetic characteristics of tissue, and convenience and practicality of usage at ambient temperature. A cell or tissue may be stored therein and serve as an archiva source for cytology, histology, and/or genetic analysis. It may be preserved and/or stored for prospective or retrospective study. Although not preferred, storage in the composition of the present invention may also follow contact of the cell or tissue with other preservatives and/or fixatives.
   The biological material prepared in step i) of the method can be a frozen or preferred a non-Erozen biological material, wherein all biological materials known to the person skilled in the art can be used as the biological material. Preferred biological materials are selected from such comprising biomolecules, for example natural, preferably isolated linear, branched or circular nucleic acids, such as RNA, especially mRNA, siRNA, miRNA, snRNA, tRNA, hnRNA or Ribozymes, DNA and the like, synthetic or modified nucleic acids, for example oligonucleotides, particularly for the primer, probes or standards used for PCR, nucleic acids or PNAs (peptide nucleic acids) marked with digoxigenin, biotin or fluorescent dyes, preferably isolated proteins or oligopeptides, synthetic or modified proteins or oligopeptides, for example antibodies with fluorescence markers or coupled with enzymes, hormones, growth factors, lipids, oligosaccharides, polysaccharides, proteoglucanes, bodily fluids such as blood, sperm, cerebrospinal liquids, saliva, sputum or urine, liquids that are obtained when processing blood, such as serum or plasma, leucocyte fractions or "buffy coat", saliva, fecal matter, smears, aspirates, scurf, hair, skin fragments, forensic samples, food or environmental samples that comprise free or bonded biomolecules, particularly free or bonded nucleic acids, metabolic products, whole organisms, preferably non-living organisms, tissues of metazoa, preferably of insects and mammals, especially from humans, for example in the form of tissue sections or organs, isolated cells, for example in the form of adhering or suspended cell cultures, organella, for example chloroplasts or mitochondria, vesicles, cell nuclei or chromosomes, plants, plant parts, plant issue or plant cells, bacteria, viruses, viroids, prions, yeasts and fungi.
   Cells may be pellets or suspensions, preferably isolated cells from a biological fluid (e. g. ascites, blood, cerebrospinal fluid, lymph, pleural exudate), cell suspensions from the aspiration of organs or lavage of body cavities, or cell smears (e.g., cervix). Cells may be isolated by enzymatic and/or mechanical disaggregation. They may be cultured as living cells for maintenance or propagation before, preservation and/or storage. Cells may be washed and collected by centrifugation into a pellet ; they may be collected on a slide or other substrate.
   For blood and other single-cell suspensions, cells may be isolated by sedimentation or density gradient centrifugation, panning on a coated or uncoated plastic plate, passage through glass wool or other chromatographic matrix, rosetting, sorting by light scatter or fluoreseently-laboled antibody, binding to antibody coated magnetic particles, or a combination thereof. Cells may be cancerous (benign or malignant) or precancerous, obtained from an animal or human subject affected by disease or suspected of same (normal or diseased), or be affected by other pathology. It may be obtained by autopsy or biopsy (e.g., catheterization or phlebotomy) or other fluid collection. Cells preferably are placed in contact with the composition (A) within one to 30 min after removal from the body or in vitro culture, but this time may be extended by cooling them on ice. Cells may be preserved and/or stored.
   Cells may be processed for cytology. They may be smeared on a slide and examined with a microscope. Antigen or antibody may be directly or indirectly labelled with a colorimetric, enzymatic, fluorescent, luminescent, magnetic, or radioactive moiety which is detectable. Cells may be identified and/or isolated in accordance with antigen expression by antibody panning or sorting, or other affinity chromatography. A cytometer may analyze or a cell sorter may separate such cells by DNA/RNA content, size, viability, binding of fluorescent-labeled antibody, or a combination thereof. A magnet may affinity purify cells that bind an antibodycoated magnetic bead. Cells may be characterized by cell cycle, division, growth, or organelles. Negative or positive selection (e,g., affinity or sorting techniques) may be used to isolate cell populations.
   The tissue may be obtained from autopsy, biopsy or from surgery. It may be a solid tissue such as, for example, parenchyme, connective or fatty tissue, heart or skeletal muscle, smooth muscle, skin, brain, kidney, liver, spleen, breast, carcinoma (e.g. bowel, nasopharynx, breast, lung, stomach etc.), cartilage, lymphoma, meningioma, placenta, prostate, thymus, tonsil, umbilical cord or uterus. Optionally, calcified tissue like bone or teeth may need to be demineralized before further processing. "Tissue" does not usually refer to single cells from a biological fluid (e.g., ascites, blood, pleural exudate), cell suspensions from the aspiration of organs or lavage of body cavities, or cell smears. The tissue may be a tumor (benign or malignant), cancerous or precancerous, obtained from an animal or human subject affected by disease or suspected of same (normal or diseased), or be affected by other pathology. It may be obtained by autopsy, biopsy (e.g., endoscopy or laparoscopy), or surgical resection. Tissue preferably is placed in contact with the composition (A) within one to 30 min after death or removal from the body but this time may be extended by cooling it on ice. A piece of tissue (e. g., a slice or block) may be preserved with and/or stored in the composition of the invention; tissue that has been preserved and/or stored may also be embedded in a medium. Tissue may be analysed by serial reconstruction with different analyses applied to adjacent sections. Negative or positive selection (e. g. microdissection with optical tweezers or laser ablation) may be used to isolate cell populations.
   A freshly prepared biological material is preferably used as a non-frozen biological material in step i) of the inventive method, for example a fresh tissue sample or freshly isolated blood cells from a living or dead organism, or in the case of a synthetic biomolecule as the biological material, freshly synthesised nucleic acids or proteins. According to the invention, a "fresh" biological material is preferably understood to mean a sample that prior to being contacted with the composition in step ii) was removed not more than 96 hours, preferably not more than 48 hours, particularly preferably not more than 24 hours, further preferably not more than 10 hours, further even more preferably not more than 60 minutes and most preferably not more than 10 minutes previously, or in the case of a synthetic biomolecule after having been synthesised. However, the designation "fresh" biological material also includes such samples that have been removed within the previously mentioned periods, but which prior to having been contacted with the composition had not been pre-treated, for example with conventional fixatives, such as for example formalin, with dyes, such as eosin, with antibodies and the like. The preparation of fresh cell samples or tissue samples can result from all methods of preparation known to the person skilled in the art for this purpose, for example in the case of a tissue sample by means of a scalpel, for example during an autopsy, in the case of a blood cell sample by centrifugation of freshly removed blood and the like. In the case of the use of a fresh biological material, the first composition used in step ii) principally serves as the stabilisation composition. Said first composition preferably is composition (A).
   A biological material may be used as a frozen biological material in step i) of the inventive method, which, after having been isolated according to the previously described technique, is firstly cooled down to temperatures of 0 °C or less, preferably to temperatures of -20°C or less and most preferably to temperatures of-70 °C or less, for example by contact with liquid nitrogen, before being contacted with the first composition in step ii). In the case that a frozen biological material is used in the inventive method, then the first composition used in step ii) principally serves as the transition composition. The first composition used in step ii) preferably is composition (A).
   Component (α1) of composition (A) is methanol. Methanol is contained in composition (A) in an amount of 10 to less than 80%, preferably from 20 % to less than 80 vol.%, more preferably from 30 to less than 80% and most preferably from 50 to less than 80 vol.%. This means that methanol can be comprised in composition (A) in an amount of up to 79, 78, 77, 76, 75, 74, 73, 72, 71, 70, 69, 68, 67, 66, 65, 64, 63, 62, 61, 60, 59, 58, 57, 56, 55, 54, 53, 52, 51, 50, 49, 48, 47, 46,45,44,43,42,41,40,39,38,37,36,35,34,33,32,31,30,29,28,27,26,25, 24, 23, 22, 21, 20, 19, 18, 17, 17, 16, 15, 14, 13, 12, 11 vol.°/a or with 10 vol.%. Preferably methanol is comprised with about 70 vol.%, with about 60 vol.% or with about 50 vol.%.
   The at least one additive (α2) of composition (A) or (a2) of the first composition of step (ii) of the method above, respectively, can be an additional solvent that differs from methanol, or an additive that is selected from the group comprising detergents, inhibitors that inhibit the degradation of nucleic acids or proteins, such as, for example the protease inhibitor PMSF or the commercially available products ANTI-RNase (Ambion, St. Austin, USA), RNAsecure^{®} (Ambion) or DEPC, alkylation agents, acetylation agents, halogenation agents, nucleotides, nucleotide analogous compounds, amino acids, amino acid analogous compounds, viscosity regulators, dyes, particularly dyes for the specific coloration of certain cellular structures, buffers, for example HEPES, MOPS, TRIS or a phosphate buffer, conservation agents, complexants, such as for example EDTA or EGTA, reducing agents, such as for example 2-mercaptoethanol, dithiothreitol (DTT), pterin, hydrogen sulfide, ascorbic acid, NADPH, tricarboxyethyl phosphine (TCEP) and hexamethylphosphoramide (Me₂N)₃P, oxidising agents such as 5,5'-dithio-bis(2-nitrobenzoic acid) (DTNB), substances that improve the permeability of cells, for example DMSO or DOPE, chaotropic substances, such as for example guanidinium isothiocyanate or guanidinium hydrochloride or chaotropic salts with anions like F⁻, PO₄³⁻, SO₄²⁻, CH₃COO⁻, C1⁻, Br⁻, I⁻, NO₃⁻, ClO₄⁻, SCN⁻, Cl₃CCOO⁻, and cations like NH₄+, Rb⁺, K⁺, Na⁺, Li⁺, Mg²⁺, Ca²⁺, Ba²⁺ as well as mixtures of at least two, at least three, at least four, at least five or at least six of these additives.
   Preferred additional components are C₂ to C₁₂ polyols belonging to but not restricted to the group comprising 1,2-ethanediol, 1,2-propanediol, 1,3-propanediol, 2-methyl-1,3-propanediol, 2-methyl-1,2-propanediol, 2,2-diemthyl-1,3-propanediol, 2,2-diethyl-1,3-propanediol, 2-methyl-2-propyl-1,3-propanediol, 2-butyl-2-ethyl-1,3-propanediol, dihydroxyaceton, 2,2-dibutyl-1,3-propanediol, 3-methoxy-1,3-propanediol, 3-methoxy-1,2-propanediol, 3-methoxy-2,3-propanediol, 2-methoxymethyl-1,3-propanediol, 3-ethoxy-1,3-propanediol, 3-ethoxy-1,2-propanediol, 3-ethoxy-2,3-propanediol, 3-allyloxy-1,2-propanediol, 2,3-butanediol, 2,3-dimethyl-2,3-butanediol, 3,3-dimethyl-1,2-butanediol, 1,2-pentanediol, 1,3-pentanediol, 1,4-pentanediol, 1,5-pentanediol, 2,3-pentanediol, 2,4-pentanediol, 2-methyl-2,4-pentanediol, 2,4-dimethyl-2,4-pentanediol, 2,2,4-Trimethyl-1,3-pentanediol, 1,2-hexanediol, 1,3-hexanediol, 1,4-hexanediol, 1,5-hexanediol, 1,6-hexanediol, 2,3-hexanediol, 2,4-hexanediol, 2,5-hexanediol, 3,4-hexanediol, 2,5-dimethyl-2,5-hexanediol, 2-ethyl-1,3-hexanediol, 1,2-heptanediol, 1,3-heptanediol, 1,4-heptanediol, 1,5-heptanediol, 1,6-heptanediol, 1,7-heptanediol, 1,8-octanediol, 1,2-octanediol, 1,3-octanediol 1,4-octanediol, 1,5-octanediol, 1,6-octanediol, 1,7-octanediol, 1,2-nonanediol, 1,9-nonanediol, 1,10-decanediol, 1,2-deeanediol, 1,2-undecanediol, 1,11-undecanediol, 1,12-dodecanediol, 1,2-dodecanediol, diethyleneglycol, dipropyleneglycol, triethyleneglycol, tripropyleneglycol, tetraethyleneglycol, tetrapropyleneglycol, pentaethyleneglycol, pentapropyleneglycol, hexaethylenglycol, hexaapropylenglycol, heptaethylen-glycol, heptapropyleneglycol, octaethyleneglycol, octapropyleneglycol, nona-ethyleneglycol, nonapropyleneglycol, decaethyleneglycol, decapropyleneglycol, cis- or trans-1,2-cylopentanediol, cis- or trms-1,3-cylopentanediol, cis- or trans-1,2-cylohexanediol, cis- or trans-1,3-cylobexanediol, cis- or trans-1,4-cylphexanediol, cis- or trans-1,2-cyloheptanediol, cis- or trans-1,3-cyloheptanediol, cis- or trans-1,4-cyloheptanediol, 1,2,3-cyclopentanetriol, 1,2,4-cyclopentanetriol, 1,2,3-cyclohexanetriol, 1,2,4-cyclohexanetriol, 1,2,3-cyloheptanetriol, 1,2,4-cyloheptanetriol, 1,2,3-propanetriol, 3-ethyl-2-hydroxymethyl-1,3-propanediol, 2-hydroxymethyl-2-methyl-1,3-propanediol, 2-hydroxymethyl-2-methyl-1,3-propanediol, 1,2,3-butanetriol, 1,2,4-butanetriol, 2-methyl-1,2,3-butanetriol, 2-methyl-1,2,4-butanetriol, 1,2,3-pentanetriol, 1,2,4-pentanetriol, 1,2,5-pentanetriol, 2,3,4-pentanetriol, 1,3,5-pentanetriol, 3-methyl-1,3,5-pentanetrial, 1,2,3-hexanetriol, 1,2,4-hexanetriol, 1,2,5-hexanctriol, 1,2,6-hexanetriol, 2,3,4-hexanetriol, 2,3,5-hexanetriol, 1,2,3-heptanetriol, 1,2,7-heptanetriol, 1,2,3-octanetriol, 1,2,8-octanetriol, 1,2,3-nonanetriol, 1,2,9-nonanetriol, 1,2,3-decanetriol, 1,2,10-decanetriol, 1,2,3-undecanetriol, 1,2,11-undecanetriol, 1,2,3-dodecanetriol, 1,1,12-dodecanetriol, 2,2,-bis(hydroxymethyl)-1,3-propanediol, 1,2,3,4-butanetetraol, 1,2,3,4-pentanetetraol, 1,2,3,5-pentanetetraol, 1,2,3,4-hexanetetraol, 1,2,3,6-hexanetetraol, 1,2,3,4-heptanetetraol, 1,2,3,7-heptanetetraol, 1,2,3,4-octanetetraol, 1,2,3,8-octanetetraol, 1,2,3,4-nonanetetraol, 1,2,3,9-nonanetetraol, 1,2,3,4-decanetetraol, 1,2,3,10-decanetetraol, trimethylolpropanol, pentaerythritol, sugar like mannite, sorbitol or arabitol, hexanehexol, 1,2,3,4,5-pentanepentol and 1,2,3,4,5,6-hexanehexaol. Most preferred additional components are diols and/or triols like 1,3-butanediol, 1,4-butanediol, 1,3-propanediol, 1,2-propanediol, 3-methyl-1,3,5-pentanetriol, 1,2,6-hexanetriol, glycerin, glycol; polyethylene glycol (PEG) and diethyleneglycol col monoethylether acetate (DEGMEA) and chloroform. It is preferred according to the present invention that the additional component in composition A is not chloroform. The PEG preferably has a melting point below ambient temperature. It may have an average molecular weight of about 800 daltons or less, preferably about 600 daltons or less, more preferably about 400 daltons or less, and even more preferably about 300 daltons or less ; the average molecular weight may be between 0 to about 800 daltons, between about 100 to about 600 daltons, or between about 200 daltons to about 400 daltons. The term "about" when referring to the average molecular weight of PEG means that a variation of 10, 25 or 50 daltons is permissible. The higher molecular weight PEG (e. g. 1000 average molecular weight or more) are not preferred although they may be present in amounts of less than 5%, 10% or 20% of the molecular weight distribution. The melting point of PEG 400 is about 4°C to about 8°C and PEG 600 is about 20°C to about 25°C. The melting point of PEG used in the composition may be 37°C or less, 32°C or less, 27°C or less, 22°C or less, 15°C or less, 10°C or less, or 5°C or less ; the lower melting points are preferred for tissues that are refrigerated or chilled during storage. PEG has a density of about 1.1 to 1.2gm/ml depending on its molecular weight so the concentrations given herein may be converted between weight and volume measurements using 1.1 as the specific gravity.
   The solvent that is different from methanol can be an organic solvent that is different from a methanol, which is preferably selected from the group comprising monohydric alcohols (monools), C₂-C₁₂ polyols, ketones, dimethylsulfoxide, aromatic hydrocarbons, halogenated hydrocarbons, ethers, carboxylic acids, carboxylic acid amides, nitriles, nitroalkanes and esters, wherein suitable solvents for example, can be selected from the group ethanol, 1-propanol, 2-propanol, 1,3-butanediol, 1,4-butanediol, acetonitrile, acetone, anisole, benzonitrile, 1-methoxy 2-propanol, quinoline, cyclohexanone, diacetin, dichloromethane, chloroform, xylene, diethyl ether, dimethyl ether, toluene, dimethyl ketone, diethyl ketone, dimethyl adipate, dimethyl carbonate, dimethyl sulfite, dioxane, dimethylsulfoxide, methyl acetate, ethyl acetate, benzoic acid, methyl benzoate, ethyl benzoate, ethylbenzene, formamide, glycerin triacetate, ethyl acetoacetate, methyl acetoacetate, N,N-diethylacetamide, N-methyl-N-ethylacetamide, N,N-ditnethylacetamide, N,N-dimethylformamide, N-methyl-N-ethylformamide, N,N-diethylfonnamide, N,N-dimethylthioformamide, N,N-diethylthioformamide, N-methyl-N-ethylthio-fortnamide, N,N-dirnethylacetamide, N-methyt-N-ethylacetamide, N,N-diethylacetamide, nitroethane, nitromethyltoluene and triethyl phosphate. Preferably compositon A doesn't comprise chloroform.
   The concentration of component (α2) and (a2) in the present invention may be about 50% (v/v), preferably 40% (v/v) or less, more preferably about 30% (v/v) or less, even more preferably about 20% (v/v) or less, about 1% (v/v) or more, 5% (v/v) or more, about 10% (v/v) or more, and any intermediate range thereof. The term "about" refers to concentrations with a variation of 1 % (v/v) or 2.5% (v/v).
   Component (α3) of composition (A) and optional component (a3) of the first composition used in step (ii) of the method above, respectively is an acid, i.e., organic or inorganic acid, preferably a weak acid. With weak acid according to the present invention is meant preferably an acid having a pKs value of from 2 to 12, more preferably from 3.5 to 8, most preferably from 4 to 7.5. Preferably said compound is a weak organic acid. More preferably said organic acid belongs to the group of amino acids, or carboxylic (mono-, bi-, tri-, polycarboxylic) acids, e.g, formic acid, fumaric acid, maleic acid, tartaric acid, citric acid, most preferably acetic acid or propionic acid..
   Component (α3) or (a3), respectively, is present in composition (A) in an amount from 0.5% to 30%, preferably from 1 to 15%, more preferably from 5 to 10%, which means that the amount can be 1, 2, 3, 4, 5, 6, 7, 8, 9, 10, 11, 12, 13, 14, 15, 16, 17, 18, 19 or 20%, particularly preferred 5, 6, 7, 8, 9, 10%.
   The composition (A) or the first composition in step ii) is preferably prepared from the components (α1) to (α3) or (α1) to (a3), respectively, by simple mixing of the components. Should any of the components have a melting point above room temperature, then it can be preferred to heat it to its melting point and then mix it with the additive. However, for the preparation, it is also possible if one of the components (α2) to (α3) or (a2) to (a3), respectively, of the composition is solid and the other component(s) is/are liquid, to dissolve the solid component in the liquid component, at least in the methanol. Thus, for example, a solid compound can be dissolved in a liquid additive or in component (α1) or (a1), respectively.
   Particularly suitable compositions usable as composition (A) are e.g. the compositions used in the examples, falling under the definition of component (A) above, independent from the conditions shown there. This means that all the compositions used in examples, falling under the above definition of this application represent the most preferred embodiments of composition (A) and can be used as said composition independent from the other conditions of the example shown.
   Composition (A) can be used as the first composition in step ii) of the inventive method. However, it is particularly pointed out, that composition (A) as well can be used in a method for treatment or preservation of biological material without the "transfer step" iii). Further, the first composition of step ii) in the inventive method can be a composition different from composition (A), as long as the first composition of step ii) comprises methanol as the main ingredient as defined above.
   Contacting the biological material with composition (A) or with the first composition in step ii) is preferably carried out by dipping the biological material into the composition that is preferably in liquid form during the contacting, such that the complete sample can be saturated with the composition. If a liquid or isolated cells or e.g. a granular sample is used as the biological material, then the contacting is carried out by mixing the biological material with the composition or by suspending the biological material in the composition.
   Thus, in accordance with a particular embodiment of the inventive method, it is preferred that the contacting of the biological material with the composition is effected at a temperature in a range -80°C to +80 °C, preferably in a range 0 °C to +80 °C, even more preferably in a range 2, 3, 4, 5, 6, 7 or 8 °C to +80 °C and further preferably in a range 18 °C to +80 °C, for example at a temperature of at least -20 °C, -19 °C, -18 °C, -17 °C, -16 °C, -15 °C, -14 °C, -13 °C, -12 °C, -11 °C, -10 °C, -9 °C, -8 °C, -7 °C, -6 °C, -5 °C, -4 °C, -3 °C, -2 °C, -1 °C, 0°C, 1 °C, 2°C,3°C,4°C,S°C,6°C,7°C,8°C,9°C, 10°C, 11 °C, 12°C, 13°C, 14°C, 15 °C, 16 °C, 17 °C, 18°C, 19 °C, 20°C, 21 °C, 22 °C, room temperature, 23 °C, 24 °C, 25 °C, 26 °C, 27 °C, 28 °C, 29 °C, 30°C, 31 °C, 32 °C, 33 °C, 34 °C, 35 °C, 36 °C, 37 °C, 38 °C, 39 °C, 40 °C, 41 °C, 42 °C, 43 °C, 44 °C, 45 °C, 46 °C, 47°C, 48 °C, 49 °C, 50 °C, 51 °C, 52 °C, 53 °C, 54 °C, 55 °C, 56 °C, 57 °C, 58 °C, 59 °C or 60 °C.
   Here, the statement that "the contacting of the biological material with the composition is effected at a temperature in a range -80 °C to +80 °C" or is effected at one of the other previously cited temperatures, means that after the contacting of the biological material with the composition, the temperature of the mixture obtained in this way is within the previously cited temperatures. Thus, for example, a deep-frozen sample at temperatures of less than -20 °C, for example a sample stored in liquid nitrogen, can be used as the biological material, wherein in this case such a quantity of composition or a composition is used with such a temperature that after contacting the biological material with the composition, the temperature of the mixture (and therefore also the temperature of the biological material) is in the above mentioned temperature range.
   According to the present invention the method for treatment of the biological material comprises a "transfer step" iii), wherein the biological material is transferred into a second composition (B) comprising up to 99 vol.% ethanol. The transfer step particularly is suitable to store the biological material, e.g. if further processing can not be carried out within the next one to three days.
   Said transfer can be carried out by taking out the biological material from the composition according to step ii) or composition (A), respectively, and immersing said material into composition (B), or by transferring or combining the whole sample, which means the biological material together with the composition according to step ii) or composition (A), respectively, into/with composition (B). In the last mentioned case e.g. composition (B) can be added to the sample (biological material and composition according to step ii) or composition (A)), or the sample can be poured into composition (B). Said step of transferring the biological material or combining the sample with composition (B) can be carried out by using e.g. two different containers/tubes/dishes, one with the composition according to step ii) or composition (A), respectively, one with composition (B) and transferring the biological material from one to the other, or by pouring the whole sample (biological material and composition according to step ii) or composition (A)) into composition (B), or by adding composition (B) to the sample. On the other hand for said transfer step iii) a particularly designed device can be used, e.g. a device having two chambers, one containing the composition according to step ii) or composition (A), one containing composition (B). The device is designed to provide the option to carry out said transfer step by any manipulation, e.g. by turning the device, by opening a barrier or by any other suitable step allowing the combination of the sample (biological material and composition according to step ii) or composition (A)) with composition (B).
   If the transfer step is carried out by combining the sample with composition (B), the composition according to step ii) or composition (A) may be mixed with composition (B) at every ratio. It is preferred, that composition (B) is used at least in an equivalent ratio compared to the composition according to step ii) or composition (A), preferably composition (B) is used in excess. Thus, the ratio of the composition according to step ii) or composition (A) to composition (B) is in the range of from 20:1 to 1:50, preferably from 1:1 to 1:24, more preferably from 1:5 to 1:10.
   The transfer according to step iii) preferably is carried out within 10 minutes to 72 h, preferably 48 h, most preferably 24 h after contact of the biological material with the first composition of step ii).
   Composition (B) comprises as the main component ethanol. Ethanol content can be up to 99% and preferably is in the range of 20 to 90%, more preferred in the range of 40 to 85 %, even more preferred in the range of 50 to 80% and most preferred in the range of 60 to 70%. Composition (B) further can comprise an acid corresponding to component (α3) or (a3) of composition (A) in an amount of 0 to 30%, preferably from 1 to 15%, more preferably from 5 to 10%, bi- or trivalent alcohols and an additional component corresponding to component (α2) or (a2) of composition (A) in amounts cited above for composition (A). Composition (B), however, contains in a highly preferred embodiment no water, which means that it is as well a non-aqueous composition.
   In addition, in accordance with a particular embodiment of the inventive method, it can also be preferred that the biological material, after having been contacted with the composition in step ii), preferably under the above mentioned temperature conditions, is stored after step ii) or preferably after step iii) at a temperature in a range -80 °C to +80 °C, preferably in a range 0 °C to +80 °C, even more preferably in a range 2, 3, 4, 5, 6, 7 or 8 °C to +80 °C and further preferably in a range 18°C to +80 °C, for example at a temperature of at least -20°C, -19 °C, -18 °C, - 17 °C, -16 °C, -15 °C, -14 °C, -13 °C, -12 °C, -11 °C, -10 °C, -9 °C, -8 °C, -7 °C, -6°C, -5°C, -4°C, -3°C, -2°C,-1 °C, 0°C, 1°C, 2°C, 3°C, 4°C, 5°C, 6°C, 7 °C, 8°C, 9°C, 10 °C, 11 °C, 12 °C, 13 °C, 14 °C, 15 °C, 16 °C, 17 °C, 18 °C, 19 °C, 20 °C, 21 °C, 22 °C, room temperature, 23 °C, 24 °C, 25 °C, 26 °C, 27 °C, 28 °C, 29°C, 30°C, 31 °C, 32 °C, 33 °C, 34°C, 35 °C, 36 °C, 37 °C, 38 °C, 39°C, 40°C, 41 °C, 42°C, 43 °C, 44 °C, 45 °C, 46 °C, 47 °C, 48 °C, 49 °C, 50 °C, 51 °C, 52°C, 53 °C, 54 °C, 55 °C, 56 °C, 57°C, 58 °C, 59°C or 60 °C, wherein this storage can occur for a period of at least one day, preferably at least 2 days, further preferably at least 3 days, optionally for at least one week, at least two weeks, at least one month, at least three months, at least six months or also at least 12 months.
   The method according to the present invention enables a treated biological material to be stored at room temperature, at refrigerator temperatures or at even higher temperatures, without the occurrence of an observable degradation of the biomolecules such as nucleic acids or proteins in the biological material. This represents a significant advantage over conventional fixation with neutral buffered formalin, which requires further processing of the specimen within 24 hours to avoid overfixation. Compared to cryofixation which compromises tissue morphology the presented method has the advantage, that is does not compromise morphology and that it is carried out without the use of liquid nitrogen or deep-freezing devices and the stabilised sample can also be stored without the use of liquid nitrogen or deep-freezing devices.
   After the inventive treatment and optionally before or also after a possible storage step, the treated biological material, particularly in case of tissue material, might be further processed. Tissues are taken through a series of reagents and are finally infiltrated and embedded in a stable medium which when hardened, provides the necessary support for microtomy. The first step in the processing is dehydration. Tissues are processed to the embedding medium by removing some or all of the free water. This is performed by transferring the specimens through increasing concentrations of hydrophilic or water miscible fluids. Examples of dehydrating agents can be alcohols like ethanol, methanol, isopropanol, straight-chain and tertiary butanols, glycol-ethers like 2-ethoxyethanol, dioxane or polyethylene glycols as well as other dehydrants like acetone, tetrahydrofurane or 2,2-dimethoxypropane. Next step of processing is clearing with a solvent, which facilitates the transition between dehydration and infiltration steps. This step is necessary whenever the dehydrant and the embedding medium are immiscible. Examples of clearants include xylene, limonene, benzene, toluene, chloroform, petroleum ether, carbon bisulfide, carbon tetrachloride, dioxane, clove oil or cedar oil or other commercially available xylene substitutes.
   After treatment and optional clearance the biological material can be infiltrated and embedded in a suitable embedding material (C), for example in paraffin, mineral oil, non-water soluble waxes, diethylene glycol, ester wax, polyester wax, celloidin, polyethylene glycols, polyethylene glycols monostearate, polyvinyl alcohol, agar, gelatine(s), nitrocelluloses, methacrylate resins, epoxy resins, other plastic media or the like, in order to be able to more easily produce tissue sections of the biological material suitable for histological examinations. Said infiltrating and embedding steps preferably are carried out under mild conditions; e.g. with low melting paraffin (wax), e.g. lower than 60 °C, and as fast as possible, however, doesn't restrict the present inventive method. Said steps can be carried out manually or by any automated system. Examples of tissue processors are the Shandon Excelsior, Shandon Pathcentre or Shandon Citadel from Thermo Electron Corporation as well as Leica TP1020, Leica ASP200S or Leica ASP300S from Leica Microsystems or any other tissue processor device.
   In addition, according to a particular embodiment of the inventive method, it can be preferred that after step iii), there follows a further step
iv) additional processing step
   selected from manual processing of the biological material, processing of the biological material by microwave energy or processing of the biological material by any tissue processor device.
   The processing of biological material with microwave energy is a known method. Said method and suitable devices for best results are described for examples in US 6,207,408 B1, WO99/09390, WO01/44783 and WO01/44784. The devices described in said documents preferably are used in the present inventive method.
   In this step the biological material is subjected to microwave radiation. Preferably it is subjected to the radiation while it is agitated in 100% ethanol for dehydration, optionally followed by 100% isopropanol as the intermedium reagent, followed by the embedding material (C) in a suitable microwave device (i.e. a microwave which should be designed for laboratory use, strictly controlling the temperature; e.g. RHS-1 from Milestone, Pelco BioWave from Pelco or Shando TissueWave from Thermo), Alternatively the intermedium step can be omitted and agitating can be performed directly in composition B or mixtures from different alcohols, followed by the embedding material (C). Preferably the biological materials are processed under heating conditions by microwave radiation of 40 to 85°C, more preferably 40 to 75°C, most preferably 40 to 65°C, effected for up to 60 minutes, preferably up to 30 minutes .
   According to a standard protocol using the RHS-1 microwave histoprocessor with vacuum from Milestone Inc. the biological material is agitated in 100% ethanol under radiation for 18min reaching in the end 65°C, followed by 100% isopropanol under same conditions. After drying of tissues for 30sec at 70°C under 500mbar vacuum, the samples are agitated in liquid paraffin up to 30min at 70°C under vacuum, reaching 150mbar. Microwave processing of the biological material has two main advantages: first the whole procedure of treatment of the biological material up to the finally prepared sample can be markedly shortened. Second, it has been found out, that shortening the processing time by microwave energy increases the yield of unde-generated nucleic acid, particularly RNA, significant.
   Thus, in a preferred embodiment the method of the present invention comprises the steps i) providing a sample, ii) fixation/dehydrating in a first composition, which might be composition (A), iii) transfer into a second composition (B), iv) processing the sample manually, by microwave energy or processing device(s) and embedding.
   The present compositions and method provide samples which are treated in a way that isolation of most of the biological components originally contained in the sample is still possible. The biomolecules have a very low degree of degradation, thus still RNA isolation (RNA is the molecule which usually has the highest degree of degradation for reason of ubiquitanous RNAses) is possible with a very high yield. Comparison with prior compositions, developed for RNA maintenance only, e.g. RNAlater (Ambion), shows that the samples give nearly the same RNA yield, however, different to RNAlater the morphology of the sample is perfectly maintained when the present compositions and method is used. Thus, the same samples can be used for molecular biological as well as for histological analysis. In addition present compositions and methods enable extraction of biomolecules from tiny samples or single cells even after histological analysis e.g. with the use of a laser microdissection device.
   A histological examination is preferably understood to mean each examination method that is suitable for analysing the morphological state of a tissue, a tissue section, a cell or sub-cellular structures, for example by microscopy and optionally with the use of dyeing and marking techniques known to the person skilled in the art.
   The biomolecules that can be analysed include all biomolecules known to the person skilled in the art, especially natural, modified or synthetic nucleic acids, natural, modified or synthetic proteins or oligopeptides, hormones, growth factors, metabolic substrates, lipids, oligosaccharides or proteoglucanes. The nucleic acids include all nucleic acids known to the person skilled in the art, especially ribonucleic acids (RNA), for example mRNA, siRNA, miRNA, snRNA, t-RNA, hnRNA or ribozymes, or deoxyribonucleic acids (DNA). Fundamentally all types of polynucleotides are concerned that include a N-glycoside or C-glycoside of a purine base or pyrimidine base. The nucleic acid can be single, double or multi-stranded, linear, branched or circular. It can correspond to a molecule occurring in cells, such as for example genomic DNA or messenger RNA (mRNA), or be produced *in vitro* such as complementary DNA (cDNA), reverse strand RNA (aRNA), or synthetic nucleic acids. The nucleic acid can consist of a few subunits, at least two subunits, preferably eight or more units, such as for example oligonucleotides, several hundred units up to several thousand subunits, such as for example expression vectors, or significantly more subunits such as genomic DNA. Preferably, the nucleic acid comprises the coding information for a polypeptide in functional connexion with regulatory sequences, which enable the expression of the polypeptide in the cell, into which the nucleic acid is brought in or is naturally present. In a preferred embodiment, the nucleic acid is therefore an expression vector. In another embodiment it is a pDNA (plasmid DNA), an siRNA, an siRNA duplication or an siRNA heteroduplication, wherein the term "siRNA" is understood to mean ribonucleic acids with a length of about 22 nucleotides, which are formed from the splitting of a double stranded RNA (dsRNA) by the enzyme "Dicer" and are built into the enzyme complex "RISC" (RNA-induced silencing complex).
   The statement "analysis of biomolecules in or of the biological material that was brought into contact with the composition" means that the analysis can be carried out both *in situ* and *ex situ,* thus, for example after isolation of the biomolecule from the biological material. If, for the purposes of the analysis, biomolecules are intended to be isolated, then it can be advantageous, especially in the case of cells, tissue or other complexes or compact samples, first of all to homogenise the samples, wherein this homogenisation can be carried out mechanically, for example by means of canulae, mortars, rotor-stator homogenisers, a ball mill or the like, chemically, by adding suitable lysis buffers that usually contain detergents and/or chaotropic substances, enzymatically, for example by adding proteases, or by a combination of these techniques.
   For the histological analysis or for the analysis of biomolecules in or of the biological material, all the analytical methods that are known and appear suitable to the person skilled in the art can be employed, preferably methods selected from the group comprising staining methods like Cresyl violet, Fuchsine - methylene blue - azur, Gallocyanin, Giemsa, Green Masson Trichrome, Heidenhain's azan, Heidenheim iron hematoxyline, Hematoxyline-Eosine, Hematoxyline-Eosine + alcian blue, Impregnation of reticuline by silver, Luxol fast blue, Methylene Blue, Staining by Pappenheim, Toluidine blue, Weigert resorcine-fuchsine, Weigert Van Gieson, Yellow Masson trichrome, optical microscopy, electron microscopy, confocal laser scanning microscopy, laser micro-dissection, scanning electron microscopy, in situ hybridisation, fluorescence in situ hybridisation, chromogene in situ hybridisation, immuno-histo-chemistry, Western blotting, Southern blotting, Northern blotting, enzyme linked immonosorbent assay (ELISA), immune precipitation, affinity chromatography, mutation analysis, polyacrylamide gel electrophoresis (PAGE), especially the two-dimensional PAGE, nucleic acid amplification technologies including, but not limited to polymerase chain reaction (PCR), transcription-mediated amplification (TMA), NASBA, SDA, branched DNA analysis, RFLP analysis (Restriction Fragment Length PolymorphismAnalysis), SAGE analysis (Serial Analysis of Gene Expression), FPLC analysis (Fast Protein Liquid Chromatography), mass spectrometry, for example MALDI-TOFF mass spectrometry or SELDI mass spectrometry, microarray analysis, LiquiChip analysis, analysis of the activity of enzymes, HLA-Typing, sequencing, WGA (Whole Genome Amplification), RT-PCR, Real-Time-PCR or -RT-PCR, RNase protection analysis or primer extension analysis.

According to a particular embodiment of the inventive method, the analysis includes both a histological analysis of the biological material as well as an analysis of biomolecules in or of the biological material. According to a further particular embodiment of the inventive method, the analysis if biomolecules includes both, an analysis of nucleic acids in or of the biological material as well as an analysis of proteins in or of the biological material.

A contribution to achieving the objects cited above is also provided by the biological material treated by means of the inventive method.

A contribution to achieving the objects cited above is also provided by a kit, comprising
(b1) a composition usable as the first composition in step ii) described in the context of the inventive method above, and
(b2) composition (B)
(b3) optionally embedding material (C) and/or reagents for the analysis of biomolecules in or of a biological material or for the analysis of the morphology of a biological material

A further contribution to achieving the objects cited above is also provided by a kit, comprising
(b1) composition (A)
(b2) optionally composition (B)
(b3) optionally embedding material (C) and/or reagents for the analysis of biomolecules in or of a biological material or for the analysis of the morphology of a biological material.

The reagents for the analysis of biomolecules in or of a biological material or for the analysis of the morphology of a biological material can be basically all reagents known to the person skilled in the art, which can be used for or during the morphological analysis of a biological material or for or during the analysis of biomolecules in a or of a biological material. These reagents particularly include dyes for staining cells or cell components, antibodies, optionally marked with fluorescent dyes or enzymes, an absorption matrix, such as for example DEAE cellulose or a silica membrane, substrates for enzymes, agarose gels, polyacrylamide gels, solvents such as ethanol or phenol, aqueous buffer solutions, RNA-free water, lysis reagents, alcoholic solutions and the like.

A contribution to achieving the objects cited above is also provided by the use of composition (A) or one of the previously described kits for the treatment of a biological material, the use of the combination of a first composition of step ii) of the inventive method with composition (B) or one of the previously described kits in the inventive method for the treatment of a biological material, especially for the stabilisation of a biological material.

A further contribution to achieving the objects cited above is provided by a method for diagnosing an illness outside of a living body, comprising the following process steps:
(c1) carrying out the inventive method comprising the process steps i), ii) iii) and optionally iv), and
(c2) analysing the treated biological material molecular biologically and/or histologically.

### Figures

Figure 1 shows preparations of RNA from liver tissue on a gel as explained in example 1. Lanes on the gel correspond to sample numbers of table 1.
Figure 2 shows preparations of RNA from liver tissue on a gel as explained in example 2. Lanes on the gel correspond to sample numbers of table 2.
Figure 3 shows preparations of RNA from liver tissue on a gel as explained in example 3, Lanes on the gel correspond to sample numbers of table 3,
Figure 4 shows preparations of RNA from intestine tissue on a gel as explained in example 4. Lanes on the gel correspond to sample numbers of table 4.
Figure 5 shows preparations of RNA from liver tissue on a gel as explained in example 5. Lanes on the gel correspond to sample numbers of table 5.
Figure 6 shows preparations of RNA from liver tissue on a gel as explained in example 6. Lanes on the gel correspond to sample numbers of table 6.
Figure 7 shows preparations of RNA from spleen tissue on a gel as explained in example 7. Lanes on the gel correspond to sample numbers of table 7.
Figure 8 shows preparations of RNA from spleen tissue on a gel as explained in example 8. Lanes on the gel correspond to sample numbers of table 8.
Figure 9 shows a fixed and stained intestine tissue, prepared according to example 9
Figure 10 shows fixed and stained spleen and kidney tissue, prepared according to example 10.
Figure 11 shows DNA, isolated from fixed spleen tissue an a gel, prepared and isolated according to example 11.

The invention is now described in more detail by the following examples. The examples are provided for illustration only and should not be considered as limiting the invention to the shown embodiments.

### Example 1

### RNA isolation from tissue samples stabilised in different reagents according to composition A

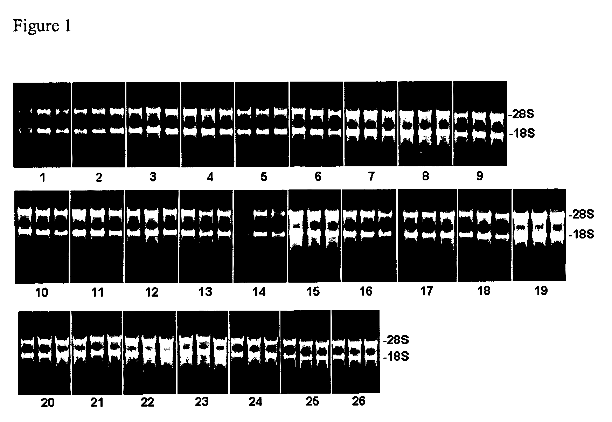

Liver tissue from rat was cut into pieces of approximately 5x4x4mm directly after dissection. The samples were completely immersed into 2 to 4ml of a fixation solution according to composition A (table 1) in a 5ml collection vessel made of polypropylene. Tissue samples were stored for 24h at ambient temperature.
RNA extraction was performed with a commercially available kit (RNeasy Mini, QIAGEN) as described in the RNeasy Mini protocol for isolation of total RNA from animal tissue. Tissue sample were cut into small pieces and placed into 2ml microcentrifuge tubes. The weight of each piece of tissue was determined and lysis buffer (Buffer RLT, QIAGEN) containing guanidine isothiocyanate (GITC) with a volume of 350µl per 10mg tissue was added along with a steel ball (5mm). Disruption and simultaneous homogenization were performed on a Mixer-Mill (Tissue-Lyser, QIAGEN) with 20Hz for 2min. According to the state of the art GITC lyses cells and precipitates proteins. Lysates were centrifuged using 14.000 rpm for 3min. 350µl supernatant, representing approximately 10mg tissue were transferred into a new tube, mixed with 1 volume (350µl) 70% ethanol, and applied on a silica membrane containing spin-column (RNeasy-Mini column). Lysates were transferred through the membrane by centrifugation, thereby adsorbing the RNA to the membrane. Contaminants were removed by washing the membrane twice with 350µl GITC containing washing buffer RW1 (QIAGEN). Between the two washing steps residual DNA was removed from the membrane by pipetting 10µl DNase (approximately 30 Kunitz units) mixed with 70µl buffer RDD (QIAGEN) onto the membrane and incubating for 15min at ambient temperature. After two more washing steps with 500µl washing buffer RPE (QIAGEN), containing Tris-Cl buffer and alcohol, the membrane was dried by full speed centrifugation for 1min at 14.000 rpm. Finally the RNA was eluted by pipetting 40µl water followed by 1min incubation at ambient temperature and centrifugation for 1min at 10.000 rpm. This elution step was repeated with additional 40µl water and both eluates were combined. All extractions were performed in triplicates.
The concentration of RNA was determined by measuring the absorbance at 260nm (A260) in a spectrophotometer. To ensure significance, eluates were diluted with 10mM Tris-Cl pH7.5 to show an absorbance A260 between 1 and 0.15. Under these conditions an absorbance of 1 unit at 260nm corresponds to 44µg RNA.
The integrity and size distribution of total RNA was analysed by denaturing agarose gel electrophoresis. For example 15µl of eluates were mixed with 3µl sample buffer containing formaldehyde (FA) and bromophenol blue, incubated 10min at 70°C, chilled on ice and loaded on a 1.0% formaldehyde-agarose-MOPS gel equilibrated with 1x FA gel running buffer. Electrophoresis was performed for 90min and approximately 3 volts per cm length of the electrophoresis chamber. RNA was visualized by ethidium bromide staining. The gel is shown as figure 1, lanes on the gel correspond to sample numbers shown in table 1.

As shown in table 1, treating a tissue sample with a composition according to composition A leads to high RNA yield comparable to tissue fixation with RNAlater, if tissue is stored for no longer than 24h. Shown are examples with different concentrations of component al and different additional components and concentrations of components a2 and a3 (table 1, 1-18 and 20-26) and RNAlater as a reference (table 1,19).
Analysis of integrity and size distribution showed, that the ribosomal bands for 18S- and 28S rRNA appeared as sharp bands on the stained gel (figure 1). Since the 28S rRNA band was approximately twice as intense as the 18S RNA band, no smaller sized RNA and almost no smear were visible on the stained gel, one can conclude that the RNA sample did not suffer from degradation during fixation or preparation.

**Table 1:**

| no. | reagent composition | RNA yield from 10mg tissue [µg] |
|---|---|---|
| 1 | 70% Methanol, 10% glacial acetic acid, 10% PEG300, 10% triol-mixture (25% 3-methyl-1,3,5-pentanetriol, 75% 1,2,6-hexanetriol) 10% glacial acetic acid | 13,79 |
| 2 | 70% Methanol, 10% glacial acetic acid, 10% PEG300, 10% diethylene glycol monoethyl ether acetate | 15,20 |
| 3 | 70% Methanol, 10% glacial acetic acid, 10% PEG300,10% 1,3-butanediol | 19,13 |
| 4 | 70% Methanol, 10% glacial acetic acid, 10% PEG300, 10% 1,4-butanediol | 20,26 |
| 5 | 70% Methano!, 10% glacial acetic acid, 20% PEG300 | 14,73 |
| 6 | 70% Methanol, 10% glacial acetic acid, 20% triol-mixture (25% 3-methyl-1,3,5-pentanetriol, 75% 1,2,6-hexanetriol),10% glacial acetic acid | 19,17 |
| 7 | 70% Methanol, 10% glacial acetic acid, 20% diethylene glycol mono-ethyl ether acetate | 29,14 |
| 8 | 70% Methanol, 10% glacial acetic acid, 20% 1,3-butanediol | 29,90 |
| 9 | 70% Methanol, 10% glacial acetic acid, 20% 1,4-butanediol | 28,08 |
| 10 | 60% Methanol, 10% glacial acetic acid, 20% triol-mixture (25% 3-methyl-1,3,5-pentanetriol, 75% 1,2,6-hexanetriol) 10% glacial acetic acid, 10% PEG300 | 17,53 |
| 11 | 60% Methanol, 10% glacial acetic acid, 20% Diethylene glycol mono-ethyl ether acetate, 10% PEG300 | 17,64 |
| 12 | 60% Methanol, 10% glacial acetic acid, 20% 1,3-butanediol, 10% PEG300 | 18,66 |
| 13 | 60% Methanol, 10% glacial acetic acid, 20% 1,4-butanediol, 10% PEG300 | 17,97 |
| 14 | 60% Methanol, 10% glacial acetic acid, 30% PEG300 | 9,60 |
| 15 | 60% Methanol, 10% glacial acetic acid, 30% triol-mixture (25% 3-methyl-1,3,5-pentanetriol, 75% 1,2,6-hexanetriol) 10% glacial acetic acid | 35,03 |
| 16 | 60% Methanol, 10% glacial acetic acid,30% diethylene glycol mono-ethyl ether acetate | 28,66 |
| 17 | 60% Methanol, 10% glacial acetic acid, 30% 1,3-butanediol | 26,92 |
| 18 | 60% Methanol, 10% glacial acetic acid, 30% 1,4.butanediol | 18,26 |
| 19 | RNAlater | 39,97 |
| 20 | 70% Methanol, 10% propionic acid, 10% PEG300, 10% LiCl (IM) | 35,57 |
| 21 | 70% Methanol, 10% propionic acid, 10% PEG300, 10% LiCl (100mM) | 32,88 |
| 22 | 70% Methanol, 10% propionic acid, 10% PEG300, 10% 1,3-butanediol | 40,37 |
| 23 | 70% Methanol, 10% propionic acid, 10% LiCl (1M), 10% 1,3-butanediol | 36,19 |
| 24 | 70% Methanol, 10% propionic acid, 10% LiCl (100mM), 10% 1,3-butanediol | 33,14 |
| 25 | 60% Methanol, 10% propionic acid., 10% PEG300; 10% LiCl (1M), 10%. 1,3-butanediol | 29,61 |
| 26 | 60% Methanol, 10% propionic acid, 10% FEG300, 10% LiCl (100mM), 10% 1,3-butanediol | 31,79 |

### Example 2

### RNA isolation from tissue stabilised with different reagents according to composition A as well as reagents containing ethanol as major component

Liver tissue from rat was cut into pieces of 5x4x4mm directly after dissection. The samples were completely immersed into 2 to 4ml of a fixation solution containing ethanol (table 2, 4-6) or methanol according to composition A (table 2, 1-3), in a 5ml collection vessel made of polypropylene. Tissue samples were stored for 24h at ambient temperature.

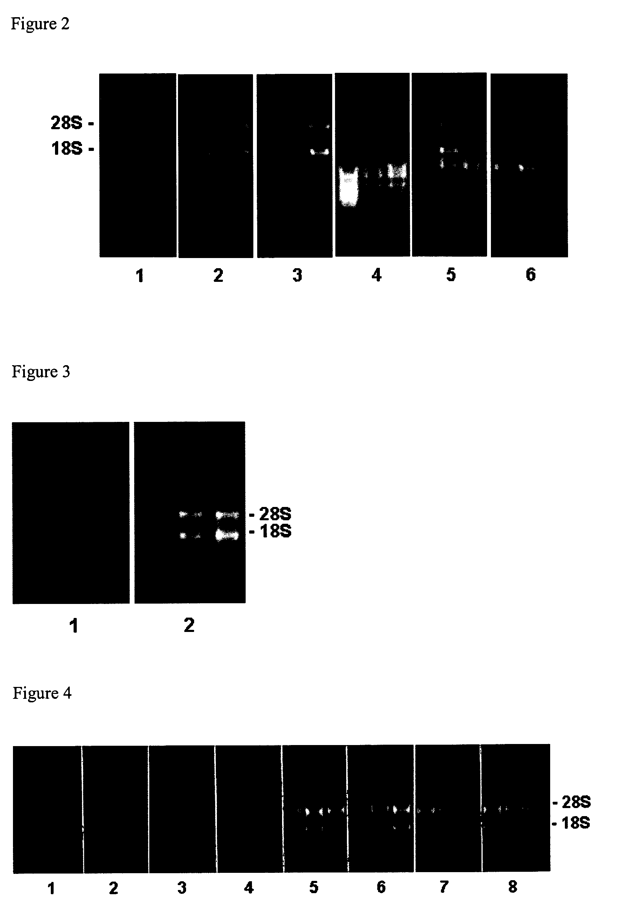

RNA extraction and analysis of yield and integrity was performed as described in example 1. All extractions were performed in triplicates. The gel is shown as figure 2, lanes on the gel correspond to sample numbers shown in table 2.

As shown in table 2, RNA yield was exceptionally high when tissue samples were stabilised with reagents containing ethanol as major component. Despite the high yield, agarose gel electrophoresis showed that the RNA from ethanol containing stabilisation reagents suffered various degree of degradation during storage. In contrast to compositions 1-3 18S and/or 28S ribosomal RNA could not be stained as sharp distinct bands. Instead a smear of different degree and bands of smaller sized RNAs became visible (figure 2). In case of the ethanol containing reagents it can be assumed that the yield determination was artificially high due to the fact that smaller fragments of ribonucleic acids show higher absorbance at 260nm.

**Table 2:**

| no. | reagent composition | RNA yield from 10mg tissue [µg] |
|---|---|---|
| 1 | 60% Methanol, 10% PEG300, 25% Diethylene glycol monoethyl ether acetate, 5% Propionic acid | 30,66 |
| 2 | 70% Methanol, 25% Diethylene glycol monoethyl ether acetate, 5% Propionic acid | 38,26 |
| 3 | 70% Methanol, 20% Diethylene glycol monoethyl ether acetate, 10% Propionic acid | 26,55 |
| 4 | 70% Ethanol | 47,29 |
| 5 | Boonfix (primary ingredient ethanol - according to the supplier) | 50,27 |
| 6 | Finefix (working solution contains 70% ethanol) | 52,96 |

### Example 3

### RNA isolation from tissue stabilised with different reagents containing methanol as major component with or without water

Liver tissue from rat was cut into pieces of approximately 5x4x4mm directly after dissection. The samples were completely immersed into 2 to 4ml of a fixation solution containing methanol in an aqueous solution (table 3, 1) or methanol in a non-aqueous reagent according to composition A (table 3, 2). Tissue samples were stored for an extensive time period of 4 days at ambient temperature.
RNA extraction and analysis of yield and integrity was performed as described in example 1. All extractions were performed in triplicates. The gel is shown as figure 3, lanes on the gel correspond to sample numbers shown in table 3.

As shown in table 3 and figure 3 (no. 2) even after 4 days storage intact RNA could be isolated from tissue samples stored in non-aqueous reagents according to composition A. The yield was decreased compared to the results shown in example 1 and 2, but 28S- and 18S rRNA were still visible as intact bands without smear or smaller, distinct RNA bands, In contrast the RNA from a tissue sample stabilised with an aqueous reagent was highly degraded and low concentrated ( no. 1 table 3 and figure 3).

**Table 3:**

| no. | reagent composition | RNA yield from 10mg tissue [µg] |
|---|---|---|
| 1 | 60% Methanol, 30% water, 10% glacial acetic acid | 2,25 |
| 2 | 60% Methanol, 30% triol-mixture (25% 3-methyl-1,3,5-pentanetriol, 75% 1,2,6-hexanetriol) 10% glacial acetic acid | 10,98 |

### Example 4

### RNA isolation from tissue stabilised with different reagents with or without transfer into a second reagent with composition B according to the invention

Intestine tissue from rat was cut into pieces of approximately 5x4x4mm directly after dissection. The samples were completely immersed into 5ml of different reagents according to composition A and stored at ambient temperature. Samples were either stored for 7 days (table 4, 1-4) or transferred after 4h hours into 5ml of a reagent according to composition B and stored within this reagent for 7 days (table 4, 5-8).
RNA extraction and analysis of yield and integrity was performed as described in example 1. All extractions were performed in triplicates. The gel is shown as figure 4, lanes on the gel correspond to sample numbers shown in table 4.

As shown in table 4 RNA yield dropped down significantly when samples were not transferred into the second reagent compared to those samples, which were transferred into a reagent according to composition B according to the invention.
Agarose gel electrophoresis showed that even after 7 days storage intact RNA could be isolated from tissue samples stored in reagents according to composition A and B and treated according to the invention. The gel confirmed the low yield when the transfer was omitted (figure 4).

**Table 4:**

| no. | reagent composition A | reagent composition B | RNA yield from 10mg tissue [µg] |
|---|---|---|---|
| 1 | 70% Methanol, 25% Diethylene glycol monoethyl ether acetate, 5% Propionic acid | - | 3,7 |
| 2 | 70% Methanol, 25% 1,3-Butanediol, 5% Propionic acid | - | 3,5 |
| 3 | 90% Methanol, 10% PEG300 | - | 4,4 |
| 4 | 70% Methanol, 30% PEG300 | - | 2,4 |
| 5 | 70% Methanol, 25% Diethylene glycol monoethyl ether acetate, 5% Propionic acid | 70% Ethanol, 30% 1,3-Butanediol | 8,7 |
| 6 | 70% Methanol, 25% 1,3-Butanediol, 5% Propionic acid | 70% Ethanol, 30% 1,3-Butanediol | 6,8 |
| 7 | 90% Methanol, 10% PEG300 | 70% Ethanol, 30% 1,3-Butanediol | 8,7 |
| 8 | 70% Methanol, 30% PEG300 | 70% Ethanol, 30% 1,3-Butanediol | 12,6 |

### Example 5:

### RNA isolation from tissue stabilised with reagents according to composition A and B according to the invention

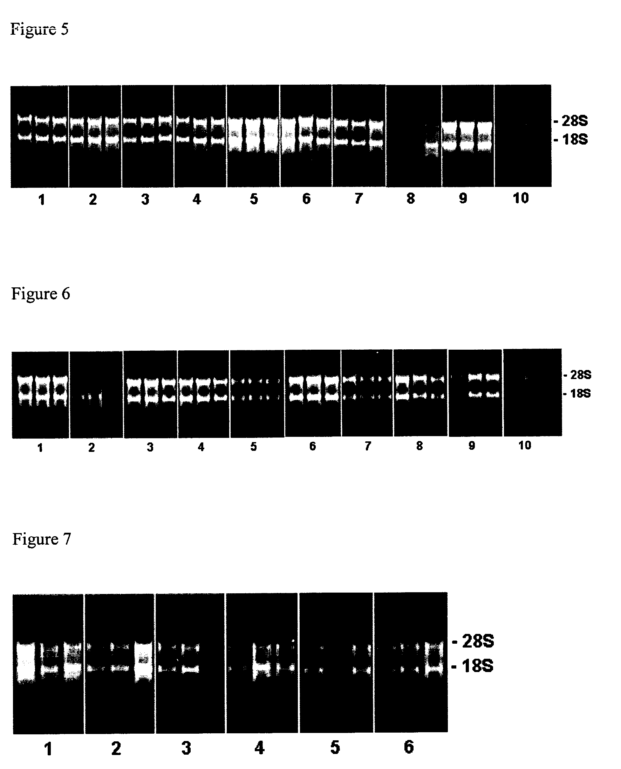

Liver tissue from rat was cut into pieces of approximately 5x4x4mm directly after dissection. The samples were completely immersed into 10ml of a reagent according to composition A and stored at ambient temperature. One sample was stored for 3 days (table 5, 10), the others were transferred after 2h hours into 10ml of different reagents according to composition B and stored within these reagents for 3 days (table 5, 1-8). As a reference one sample was stored in RNAlater (table 5, 9).
RNA extraction and analysis of yield and integrity was performed as described in example 1. All extractions were performed in triplicates. The gel is shown as figure 5, lanes on the gel correspond to sample numbers shown in table 5

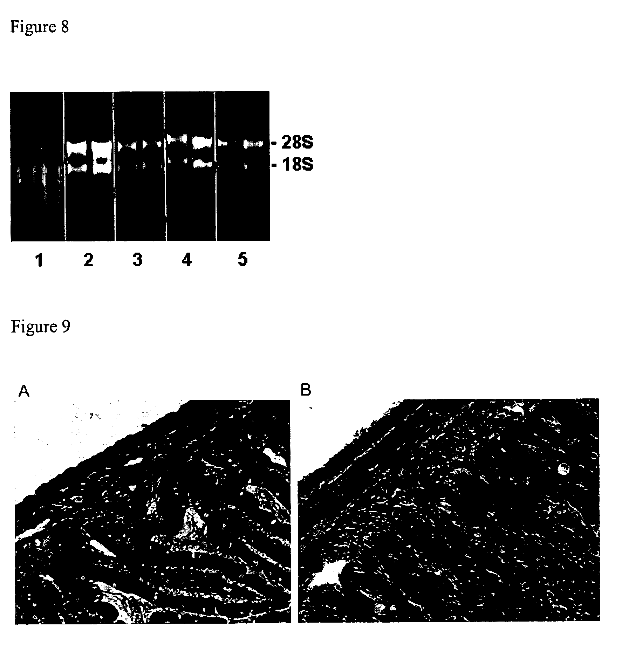

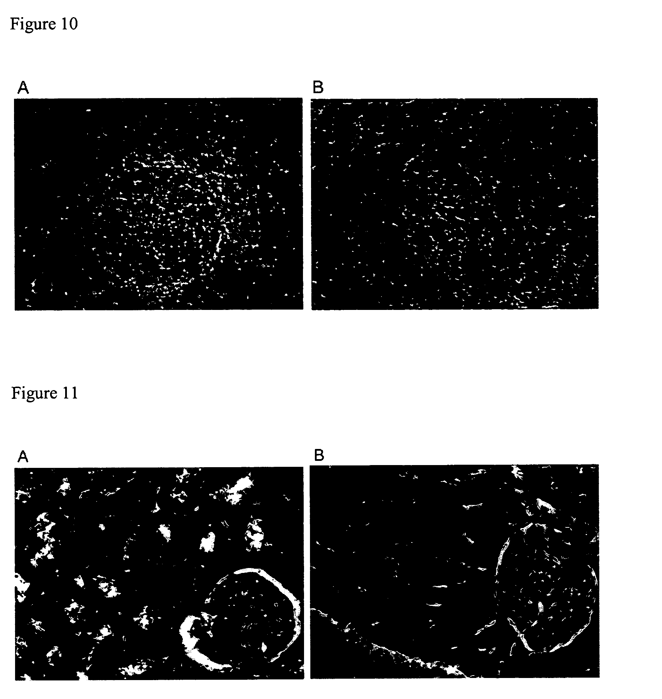

This example shows once more the effect of tissue treatment on RNA stability according to the invention, i.e. the transfer from a reagent according to composition A to a reagent according to composition B. In samples where transfer took place the RNA yield remained high in a range comparable to the reference with RNAlater (table 5, 1-7 and 9). No visible RNA degradation could be observed even after 3 days of storage (figure 5, 1-7 and 9). In contrast, when the transfer was omitted, yield dropped down significantly and RNA degradation became visible by increased smear and a diminished 28S rRNA band (table 5, 10 and figure 5, 10). A similar effect could be observed when the sample was transferred into Boonfix (see above), which according to the supplier is a reagent consisting mainly of ethanol but is balanced with water (table 5, 8 and figure 5, 8).

**Table 5:**

| no. | reagent composition A | reagent composition B | RNA yield from 10mg tissue [µg] |
|---|---|---|---|
| 1 | 70% Methanol, 10% Glacial acetic acid/ 10% PEG300, 10% 1,3-Butanediol | 70% Ethanol, 30% 1,3-Butanediol | 35,90 |
| 2 | 70% Methanol, 10% Glacial acetic acid/ 10% PEG300, 10% 1,3-Butanediol | 70% Ethanol, 1% 1% Glacial acetic acid, 29% 1,3-Butanediol | 33,97 |
| 3 | 70% Methanol, 10% Glacial acetic acid/ 10% PEG300, 10% 1,3-Butanediol | 70% Ethanol, 5% 1% Glacial acetic acid, 25% 1,3-Butanediol | 19,93 |
| 4 | 70% Methanol, 10% Glacial acetic acid/ 10% PEG300, 10% 1,3-Butenediol | 70% Ethanol, 10% 1% Glacial acetic acid, 20% 1,3-Butanediol | 18,44 |
| 5 | 70% Methanol, 10% Glacial acetic acid/10% PEG300, 10% 1,3-Butanediol | 60% Ethanol, 40% 1,3-Butanediol | 41,68 |
| 6 | 70% Methanol, 10% Glacial acetic acid/ 10% PEG300, 10% 1,3-Butanediol | 60% Ethanol, 1% 1% Glacial acetic acid, 39% 1,3-Butanediol | 33,86 |
| 7 | 70% Methanol, 10% Glacial acetic acid/10% PEG300, 10% 1,3-Butanediol | 60% Ethanol, 3% 1 % Glacial acetic acid, 35% 1,3-Butanediol | 21,02 |
| 8 | 70% Methanol, 18% Glacial acetic acid/ 10% PEG300, 10% 1,3-Butanediol | Boonfix | 14, 59 |
| 9 | RNAlater | - | 37,25 |
| 10 | 70% Methanol, 10% Glacial acetic acid/10% PEG300, 10% 1,3-Butanediol | - | 6,00 |

### Example 6:

### RNA isolation from issue stabilised according to the invention

Liver tissue from rat was cut into pieces of approximately 5x4x4mm directly after dissection. The samples were completely immersed into 2ml of a reagent according to a composition of step ii), stored at ambient temperature for 4 hours, transferred into different reagents according to composition B and stored for additional 2 days (table 6, 3-9). In addition one sample was not transferred but stored within the reagent composition according to step ii) (table 6, 10), one sample was transferred into 100% ethanol (table 6, 1) and one sample was transferred into 70% ethanol (table 6, 2).
RNA extraction and analysis of yield and integrity was performed as described in example 1, All extractions were performed in triplicates. The gel is shown as figure 6, lanes on the gel correspond to sample numbers shown in table 6.

This example demonstrates the stabilising effect according to the invention of transfer into different reagents according to composition B. Shown are different reagents with different additional components (a2) and concentrations of organic acids (a3) (table 6, 3-9 and figure 6, 3-9). Balancing of the second reagent with water led to decreased RNA yield and increased smear on the agarose gel, indicating advanced degradation (table and figure 6, 2). Omitting the transfer led to decreased RNA yield (table 6 and figure 6, 10). Transfer into 100% ethanol did not lead to any degradation and resulted in high RNA yield (table 6 and figure 6, 1). However it is commonly accepted that tissue samples stored in 100% ethanol undergo hardening and shrinkage. As a consequence the specimens become brittle which leads to artefacts when subsequent histological work methods are conducted.

**Table 6:**

| no. | reagent composition according to ii) | reagent composition B | RNA yield from 10mg tissue [µg] |
|---|---|---|---|
| 1 | 60% methanol, 30% chloroform, 10% glacial acetic acid | 100% ethanol | 36,51 |
| 2 | 60% methanol, 30% chloroform, 10% glacial acetic acid | 70% ethanol, 30% water | 8,16 |
| 3 | 60% methanol, 30% chloroform, 10% glacial acetic acid | 70% ethanol, 30% 1,3-eutanediol | 29,50 |
| 4 | 60% methanol, 30% chloroform, 10% glacial acetic acid | 70% ethanol, 30% diethyleneglycol monoethyl etheracetate | 33,22 |
| 5 | 60% methanol, 30% chloroform, 10% glacial acetic acid | 70% ethanol, 30% PEG300 | 24,29 |
| 6 | 60% methanol, 30% chloroform, 10% glacial acetic acid | 70% ethanol, 30% 1,2,6-hexanetriol | 29,22 |
| 7 | 64% methanol, 30% chloroform, 10% glacial acetic acid | 70% ethanol, 5% glacial acetic acid. 25% 1,3-butanediol | 9,41 |
| 8 | 60% methanol, 30% chloroform, 10% glacial acetic acid | 70% ethanol, 5% glacial acetic acid, 25% diethyleneglycol monoethyl ether acetate | 16,74 |
| 9 | 60% methanol, 30% chloroform, 10% glacial acetic acid | 70% ethanol, 5% glacial acetic acid, 25% 1,2,6-hexanetriol | 14,24 |
| 10 | 60% methanol, 30% chloroform, 10% glacial acetic acid | - | 4,48 |

### Example 7:

### RNA isolation from paraffin embedded tissue stabilised with reagents according to composition A and B according to the invention, and processed by a conventional method

Spleen tissue from rat was cut into pieces of approximately 4x4x4mm directly after dissection. The samples were completely immersed into 5ml of a reagent according to composition A and stored at ambient temperature for 24 hours. After this incubation period samples were either directly processed (table 7, 1 and 4) or transferred into a reagent according to composition B, stored for additional 4 days at ambient temperature (table 7, 2 and 5) or at 4°C (table 7, 3 and 6) and finally processed.
Processing comprising of dehydration, clearing, infiltration and embedding, was performed manually following standard protocols. The specimens were placed into standard processing cassettes (histosettes) and dehydrated by transfer through increasing concentrations of ethanol, i.e. incubation in 70, 80, two times 96% ethanol, 60min each. Clearing as the transition step between dehydration and infiltration with the embedding medium was performed by incubation twice for 60min in 100% xylene. Tissue cavities and cells were saturated in liquid paraffin (low melting Paraplast XTRA, Roth Inc.) at 56°C for approximately 12 hours. To provide the necessary support for microtomy specimen were embedded into the same paraffin used for infiltration.
Freshly cut sections of the paraffin blocks were used as starting material for RNA extraction. Paraffin blocks were trimmed with a rotary microtome (Leica RM2245) and 10 slices with a thickness of 10µm each where cut off from each specimen and collected in a microcentrifuge tube. Deparaffination was performed by adding lml of xylene, vortexing and centrifugation for 2min at 14.000 rpm. The supernatant was removed and the pellet was dissolved with 1ml of 100% ethanol. After centrifugation for 2min at 14.000 rpm the supernatant was removed and the ethanol washing step was repeated. After centrifugation and removal of the ethanol the pellet was dissolved within 350µl Buffer RLT (QIAGEN) containing 0.143 M ß-mercaptoethanol. For homogenisation the lysate was loaded on a QIAshredder spin column (QIAGEN) and centrifuged for 3min at 14.000 rpm. The flowthrough was mixed with 1 volume of 70% ethanol (350µl) and loaded on a RNeasy MinElute spin column (QIAGEN). The lysates were transferred through the membrane by centrifugation, thereby absorbing the RNA to the membrane. Washing steps with buffer RW1 and RPE as well as on membrane DNase digestion were performed as described in example 1. For elution 15µl of water were pipetted on the silica membrane. RNA was eluted after 1min incubation at ambient temperature by 1min centrifugation at 14.000rpm.

All extractions were performed in triplicates and RNA analysis of yield and integrity was performed as described in example 1. The gel is shown as figure 7, lanes on the gel correspond to sample numbers shown in table 7.
Analysis of RNA integrity by agarose gel electrophoresis (figure 7) revealed that from paraffin embedded tissue samples treated according to the invention full length RNA can be isolated. Even incubation for up to 12 hours in liquid paraffin, necessary for specimen embedding did not lead to major RNA degradation. Bands for 29S- and 18S- rRNA were still visible as sharp and distinct bands (figure 7). Variation of RNA yield (table 7) can be explained by different amount of starting material. In contrast to the RNA extractions from soft tissue, starting material within the slices could not be determined and normalized to e.g. 10mg per sample. Significant differences between storage of tissue in reagent according to composition B at 4°C or ambient temperature could not be observed.

**Table 7:**

| no. | reagent composition A | reagent composition B | RNA yield from 10 slices à 10µm [µg] |
|---|---|---|---|
| 1 | 60% Methanol, 5% Propionic acid, 10% PEG300, 25% Diethylene-glycol monoethyl ether acetate | - | 3,53 |
| 2 | 60% Methanol, 5% Propionic acid, 10% PEG300, 25% Diethylene-glycol monoethyl ether acetate | 70% Ethanol, 30% 1,3-Butanediol | 1,79 |
| 3 | 60% Methanol, 5% Propionic acid, 10% PEG300, 25% Diethylene-glycol monoethyl ether acetate | 70% Ethanol, 30% 1,3-Butanediol | 1,25 |
| 4 | 70% Methanol, 10% Propionic acid, 20% Diethyleneglycol mono-ethyl ether acetate | - | 2,70 |
| 5 | 70% Methanol, 10% Propionic acid, 20% Diethyleneglycol mono-ethyl ether acetate | 70% Ethanol, 30% 1,3-Butanediol | 1,53 |
| 6 | 70% Methanol, 10% Propionic acid, 20% Diethyleneglycol mono-ethyl ether acetate | 70% Ethanol, 30% 1,3-Hutanediol | 1,39 |

### Example 8:

### RNA isolation from paraffin embedded tissue stabilised according to the invention, processed by microwave energy

Spleen tissue from rat was cut into pieces of approximately 4x4x4mm directly after dissection. The samples were completely immersed into 5ml of a reagent according to composition A. Samples were stored at ambient temperature for 24 hours (table 8, 2 and 3) or transferred after 30min into a reagent according to composition B and stored for 24 hours at ambient temperature (table 8, 4 and 5).
In parallel one sample was immersed into 5ml of Boonfix (table 8, 1). After 24 hours samples were placed into standard processing cassettes (histosettes) and processed on a RHS-1 microwave histoprocessor (Milestone).
For processing a four step standard protocol was applied, involving dewatering samples in 100% ethanol and heating to 65°C by microwave energy. The ethanol was replaced by isopropanol and after air drying by vacuum and heat, specimens were infiltrated in liquid paraffin (low melting Paraplast XTRA, Roth Inc.) in a final step with heat by microwave energy and simultaneous vacuum (protocol steps see table 9). To provide the necessary support for microtomy specimen were manually embedded into the same paraffin used for infiltration.
Paraffin embedded tissue blocks were stored at ambient temperature for 5 weeks prior to RNA extraction. RNA was extracted from 10 freshly prepared slices of 10µm thickness. Deparaffination, RNA extraction and analysis of yield and integrity were performed as described in example 7 (and 1 respectively). All extractions were performed in duplicates. The gel is shown as figure 8, lanes on the gel correspond to sample numbers shown in table 8.

As shown in figure 8, RNA from tissue samples stabilised according to the invention and processed by microwave energy was of high quality with no signs of degradation (figure 8, 2-5). Ribosomal bands of 28S- and 18S rRNA were sharp, with neither smear nor smaller bands detectable, in contrast to the sample treated with Boonfix (figure 8, 1).

**Table 8:**

| no. | reagent composition | reagent composition B | RNA yield from 10 slices à 10µm [µg] |
|---|---|---|---|
| I | Boonfix (primary ingredient ethanol - according to the supplier) | - | 2,43 |
| 2 | 70% Methanol, 5% Propionic acid, 25% Diethylene glycol monoethyl ether acetate | - | 4,54 |
| 3 | 60% Methanol, 5% Propionic acid, 25% Diethylene glycol monoethyl ether acetate, 10% PEG(300) | - | 4,55 |
| 4 | 70% Methanol, 5% Propionic acid, 25% Diethylene glycol monoethyl ether acetate | 70% Ethanol, 30% 1,3-Butanediol | 2,11 |
| 5 | 60% Methanol, 5% Propionic acid, 25% Diethylene glycol monoethyl ether acetate, 10% PEG(300) | 70% Ethanol, 30% 1,3-Butanediol | 3,55 |

**Table 9:**

| Step | Incubation medium | Duration [min] | Microwave heating | Vacuum [mbar] | Stirring |
|---|---|---|---|---|---|
| 1 | Ethanol | 18 | up to 65°C | no | yes |
| 2 | Isopropanol | 19 | up to 68°C | no | yes |
| 3 | Airdry | 0.5 | 70°C | 500 | no |
| 4 | Liquid paraffin | 22 | 70°C | down to 100 | yes |

### Example 9:

### Histological analysis of tissue samples stabilised with reagents according to composition A and B according to the invention; processed by a conventional method

Small intestine tissue from rat was cut into pieces with approximately 6mm in length directly after dissection. The sample was completely immersed into 5ml of a reagent according to composition A. After 4 hours at ambient temperature the sample was transferred into a reagent according to composition B and stored for 20 hours at ambient temperature (table 10, A). In parallel one sample was immersed into 5ml of a 10% solution of neutral buffer formalin (NBF; table 10, B). After 24 hours samples were placed into standard processing cassettes (histosettes) and processed manually following a standard protocol starting with incubation twice in 100% ethanol for 180min each. Clearing was performed by incubation twice for 60min in 100% xylene. Infiltration in liquid paraffin (low melting Paraplast XTRA, Roth Inc.) was performed at 65°C for approximately 12 hours followed by embedding into the same paraffin.
Sections of 6µm thickness were sliced with a rotary microtome (Leica RM2245) and mounted on slides. Haematoxylin and eosin staining was performed manually with dyes from Sigma Inc., following a standard protocol (table 11).

As shown in figure 9 (100-fold magnification) the section from a tissue sample stabilised according to the invention (figure 9, A) displayed a similar morphological preservation as the section preserved in 10% neutral buffered formalin (figure 9, B).

**Table 10:**

| no. | reagent composition | reagent composition B |
|---|---|---|
| A | 70% Methanol, 10% Propionic acid, 20% Diethylene glycol monoethyl ether acetate | 70% Ethanol, 30% 1,3-Butanediol |
| B | NBF, 10% of neutral buffered formalin | - |

**Table 11:**

| Incubation/Medium | Duration [min] |
|---|---|
| Incubation at 70°C | 10 |
| Rotihistol (Xylene substitute, Roth Inc.) | 10 |
| Rotihistol | 10 |
| 96% Ethanol | 5 |
| 80% Ethanol | 5 |
| 70% Ethanol | 5 |
| 60% Ethanol | 5 |
| water | 3 |
| Mayer's Haematoxylin | 5 |
| water | 0.5 |
| 70% Ethanol containg 1% HCl | 0.5 |
| water | 5 |
| Eosin | 5 |
| water | 1 |
| 96% Ethanol | 3 |
| 96% Ethanol | 5 |
| 100% Isopropanol | 10 |
| Rotihistol | 10 |
| Rotihistol | 10 |

### Example 10:

### Histological analysis of tissue samples stabilised with different reagents according to composition A according to the invention; processed by a conventional method

Spleen and kidney from rat were cut into pieces of approximately 3x5x5 mm directly after dissection. The samples were completely immersed into 10ml of a reagent according to composition A or in 10% neutral buffered formalin (table 12). After 24 hours at ambient temperature the samples were processed and stained. Processing of the samples was performed approximately 30 hours after dissection in a Leica TP1020 Tissue Processor. Paraffin embedded tissue samples were cut in 6µm slices. Only the kidney sample preserved in 10% formalin was cut in 4µm slices. Haematoxylin and eosin staining was performed on a Leica Autostainer following standard protocols identical or similar to the procedures described in detail in examples 7 and 9.

Figure 10 shows sections of spleen stained with haematoxylin and eosin in a 100-fold magnification. The results demonstrate similar morphological preservation between the tissue sample preserved in a reagent according to composition A (figure 10, A) and the sample preserved in 10% neutral buffered formalin (figure 10, B). The same result holds true for kidney, depicted in figure 11 (A) or (B); respectively, with 200-fold magnification. The only difference observed addresses erythrocytes. In case of the fixation reagent according to composition A the erythrocytes do not contain haemoglobin.

**Table 12:**

| no. | reagent composition |
|---|---|
| A | 70% Methanol, 10% Glacial acetic acid, 10% Diethylene glycol monoethyl ether acetate, 10% PEG300 |
| B | NBF, 10% of neutral buffered formalin |

### Example 11:

### DNA isolation from paraffin embedded tissue, stabilised with reagents according to composition A according to the invention, processed by a conventional method

Spleen tissue from rat was cut into pieces of approximately 2x5x5mm directly after dissection. The samples were completely immersed into 5ml of different reagents according to composition A (table 13) and stored at ambient temperature for 24 hours. After this incubation period samples were manually processed as described in example 7. Paraffin embedded tissue blocks were stored at ambient temperature for 5 weeks prior to DNA extraction.
For DNA extraction, paraffin blocks were cut into half. Pure paraffin was removed and the tissue deparaffinized with xylene and ethanol (see also example 7). DNA extraction was performed with a commercially available kit (DNeasy Tissue kit, QIAGEN) as described in the DNeasy Tissue protocol for 'purification of total DNA from animal tissues'. The pellet resulting from deparaffination was dissolved in 180µl buffer ATL and a steel ball (5mm) was added. Disruption and simultaneous homogenization was performed on a Mixer-Mill (Tissue-Lyser, QIAGEN) with 20Hz for 15seconds. The lysates were frozen at -20°C and further processed after 24 hours by adding 40µl proteinase K (activity 600 mAU/ml). Digestion was performed for one hour at 55°C with constant gentle mixing of the samples. RNA was removed from the samples by adding 4µl RNase A (100mg/ml) and incubation for 2min at ambient temperature. After adding 200µl lysis buffer AL (QIAGEN), incubation for another 10min at 70°C and adding 200µl ethanol (100%) the lysates were applied on a silica membrane containing DNeasy Mini spin column, Lysates were transferred through the membrane by centrifugation (1min, 8000 rpm), thereby absorbing the DNA to the membrane. Contaminants were removed by washing the membrane with 500µl AW1 and 500µl AW2 (QIAGEN). After the last washing step the membrane was dried by full speed centrifugation for 3min at 14.000 rpm. Finally the DNA was eluted by pipetting 100µl water followed by 1min incubation at ambient temperature and centrifugation for 1min at 10.000 rpm. This elution step was repeated with another 100µl water and both eluates were combined.
The concentration of DNA was determined by measuring the absorbance at 260nm (A260) in a spectrophotometer. For DNA an absorbance of 1 unit at 260nm corresponds to 50 µg DNA.
The integrity and size of total DNA was analysed by agarose gel electrophoresis. 400ng DNA in 15µl volume were mixed with 5µl loading buffer (containing 50% glycerol and bromophenol blue). The samples were applied to 0.8% agarose gels in 1x TBE buffer. Electrophoresis was run for 120min and approximately 3.3 Volts per cm length of the electrophoresis chamber. DNA was visualised by ethidium bromide staining.

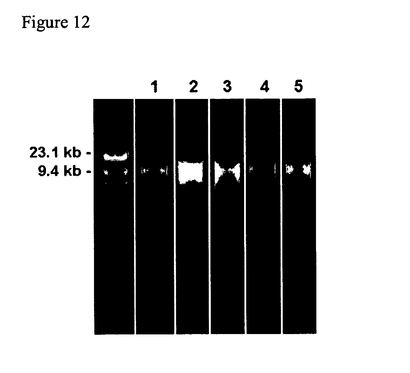

The DNA extracted from tissue samples preserved in a reagent according to composition A, processed, embedded into paraffin blocks and stored for 5 weeks was of high molecular weight when extracted with the QLAamp DNeasy procedure. Figure 12 shows a gel electrophoresis with 400ng DNA from each sample (lanes correspond to sample numbers of table 13). Typical yields are listed in table 13.

**Table 13:**

| no. | reagent composition A | DNA yield [µg] |
|---|---|---|
| 1 | 70% Methanol, 10% Propionic acid, 20% PEG300 | 50,10 |
| 2 | 70% Methanol, 10% Propionic acid, 20% triol-mixture (25% 3-Methyl-1,3,5-pentanetriol, 75% 1,2,6-Hexanetriol) | 41,90 |
| 3 | 70% Methanol, 10% Propionic acid, 20% Diethylene glycol monoethyl ether acetate | 17,80 |
| 4 | 70% Methanol, 10% Propionic acid, 20% 1,3-Butanediol | 33,10 |
| 5 | 70% Methanol, 10% Propionic acid, 20% 1,4-Butanediol | 61,30 |

## Claims

1. Method for treating a biological material, wherein the method comprises the steps of
i) providing a biological material, and
ii) contacting the biological material with a first non-aqueous composition comprising:
(a1) 10 to 90 vol.% methanol, and
(a2) at least one additional additive, and
(a3) optionally an acid.
iii) transferring the biological material into a second composition (B) comprising up to 99 vol.% ethanol

2. Method according to claim 1, wherein the contacting of the biological material with the composition(s) is effected at a temperature in a range -80°C to +80 °C.

3. Method according to claim 1 or 2, wherein transfer step iii) is carried out by taking out the biological material from the composition of step ii) and immersing the material in composition (B), or by combining the composition of step ii) containing the biological material with composition (B).

4. Method according to any of claims 1 to 3, wherein the method comprises, an
iv) additional processing step selected from manual processing of the biological material, processing of the biological material by microwave energy or processing of the biological material by any tissue processor device.

5. Method according to any of claims 1 to 4, wherein the biological material comprises cells or tissue.

6. Method according to claim 5, wherein the biological material contains organisms, isolated cells, organella, bacteria, fungi or parts of fungi, viruses, viroids, prions, tissue, tissue fragments, tissue sections, body fluids, natural, optionally isolated proteins, synthetic or modified proteins, natural, optionally isolated nucleic acids, synthetic or modified nucleic acids, other biomolecules such as, lipids, carbohydrates, metabolic products and metabolites, plants or parts of plants, faecal matter, swabs, aspirates, food samples, environmental samples, forensic samples.

7. Method according to any of claims 1 to 6, further comprising : infiltration and/or embedding the material after step iii) in an embedding material (C), preferably selected from paraffin, mineral oil, non-water soluble waxes, celloidin, polyethylene glycols, polyvinyl alcohol, agar, gelatine, nitrocellu-loses, methacrylate resins, epoxy resins, or other plastic media.

8. Non-aqueous composition (A) for preservation of biological material, usable in a method according to any of claims 1 to 7 comprising
(α1) 10 to less than 80 vol.%, methanol, and
(α2) at least one additional additive, and
(α3) an acid.

9. Composition according to claim 8, wherein component (α1) is present in an amount of 20 % to less than 80 vol.%, preferably from 30 to less than 80% and most preferably from 50 to less than 80 vol.%.

10. Composition according to claims 8 or 9 or method according to any of claims 1 to 7, wherein component (α2) or (a2) is present in an amount of 1 to 50 %.

11. Composition or method according to any of claims 1 to 10, wherein component (α3) or (a3) is at least one organic acid, preferably a weak organic acid, more preferably selected from formic acid, acetic acid and propionic acid or mixture thereof.

12. Composition or method according to any of claims 1 to 11, wherein component (α2) or (a2) is selected from the group comprising one or more detergents, one or more inhibitors that inhibit the degradation of nucleic acids and/or proteins, one or more viscosity regulators, one or more dyes, one or more buffer compounds, one or more preservatives, one or more complexants, one or more reducing agents, one or more substances that improve the permeability of cells, one or more chaotropic substances, one or more fixatives, one or more additional solvents that are different from methanol as well as mixtures of at least two of these additives

13. Composition or method according to claim 12, wherein component (α2) or (a2) is selected from C₂ to C₁₂ polyols, particularly diols and/or triols like 1,3-butanediol, 1,4-butanediol, 1,3-propanediol, 1,2-propanediol, 3-methyl-1,3,5-pentanetriol, 1,2,6-hexanetriol, glycerine, glycol; PEG and DEGMEA.

14. A kit, comprising
(b1) a composition usable as the first composition in step ii) in the method of any of claims 1 to 7, and
(b2) composition (B)
(b3) optionally embedding material (C) and/or reagents for the analysis of biomolecules in or of a biological material or for the analysis of the morphology of a biological material.

15. A kit, comprising
(b1) composition (A)
(b2) optionally composition (B)
(b3) optionally embedding material (C) and/or reagents for the analysis of biomolecules in or of a biological material or for the analysis of the morphology of a biological material.

16. Use of a composition (A) according to any of claims 8 to 13 or of the kit according to claims 13 or 14 for the treatment of a biological material.

17. Use of a composition (A) according to any of claims 8 to 13 or of the kit according to claims 13 or 14 in a method according to any of the claims 1 to 7 or 10 to 12.

18. Method for the production of a treated biological material, wherein a composition (A) according to any of claims 8 to 13 or a kit according to claims 14 or 15 is used.

19. Method for the analysis of a biological material outside of a living body, wherein a method according to any of claims 1 to 7 or 10 to 13, a composition (A) according to any of claims 8 to 13 or a kit according to claims 14 or 15 is used.

20. Treated biological material, obtained by a method according to any of claims 1 to 7 or 10 to 13 or by contacting a biological material with a composition (A), as is defined in any of claims 8 to 13.
